# EUROPEAN PATENT SPECIFICATION

(11) **EP 2 184 828 B1**
(45) Date of publication and mention of the grant of the patent: **24.04.2019**
(21) Application number: 08019653.8
(22) Date of filing: 11.11.2008
(51) Int. Cl.: H02H 11/00

(54) **A detection circuit and a method for detecting a wrong power line connection**
Detektionsschaltung und Verfahren zur Detektion eines falschen Stromleitungsanschlusses
Circuit de détection et procédé de détection d'une connexion de ligne électrique erronée

(43) Date of publication of application: 12.05.2010
(73) Proprietor: Electrolux Home Products Corporation N.V., 1130 Brussels (BE)
(72) Inventor: Jeanneteau, Laurent, 60200 Compiegne (FR); Ferrozzi, Roberto, 40134 Bologna (IT); Christiansen, Svend, Erik, 48018 Faenza (IT); Barocci, Mario, 47023 Cesena (IT)

(56) References cited:
- EP-A- 1 220 410
- CN-A- 1 175 810
- US-A- 5 440 441
- US-A1- 2007 159 738

## Description

The present invention relates to a household appliance with a detection circuit for detecting a wrong power line connection. Further the present invention relates to a method for detecting a wrong power line connection in a household appliance. In particular, the detection circuit and the method according to the present invention are provided for a cooking oven or a cooking hob.

Some modern household appliances require a high electric power. For example, an electric cooking hob may have a peak power of about 7200 W, and a cavity cooking oven may have a peak power of about 3600 W.

Power lines in private households have a voltage either of 230 V with one power line or of 230 V / 400 V with three power lines. In first case there is one voltage of 230 V between the single power line and the neutral line. In the second case the voltages between two of the three power lines are 400 V, and the voltages between each of the three power lines on the one hand and the neutral line on the other hand is also 230 V.

In this second case, the installer or the operator can connect the household appliance to different voltages. However, if a household appliance, which is provided for 230 V, is connected wrongly to the supply voltage of 400 V, then electronic circuits of the household appliances may be destroyed. Thus, a detection circuit is required in order to recognize or detect, if the household appliance is connected to the wrong power line.

Some conventional household appliances comprise a separate detection circuit for recognizing the wrong power line. Such a detection circuit comprises additional components and is provided to detect a wrong power line connection.

US 2007/0159738 A1 discloses a receptacle for power circuit. The receptacle comprises a line terminal for receiving a voltage including one of a nominal voltage and a bigger excessive voltage. Further, the receptacle comprises a load terminal, a neutral terminal, a load neutral terminal and separable contacts electrically connected between the line and load terminals. Additionally, the receptacle comprises an operating mechanism structured to open and close the separable contacts, and a trip mechanism cooperating with the operating mechanism to trip open said separable contacts. The trip mechanism includes an overvoltage circuit for detecting a sustained excessive voltage condition between the neutral terminal and the line or load terminal and for responsively actuating the operating mechanism to trip open the separable contacts. The receptacle comprises a receptacle casing and is formed as a separate device. However, the receptacle comprises a relative high number of components and is complex.

It is an object of the present invention to provide a household appliance with a detection circuit and a method for detecting a wrong power supply connection, wherein said detection circuit and the according method require a reduced number of electronic elements.

This object of the present invention is achieved by the household appliance with a detection circuit according to claim 1.

According to the present invention the household appliance with a detection circuit for detecting a wrong power line connection, wherein said detection circuit is integrated within the household appliance, comprises:
- a power supply unit connectable to an external supply voltage,
- at least one relay, wherein the secondary side of said relay is connected to the power supply unit and connectable to the external supply voltage,
- detection means for detecting a residual voltage at the secondary side of the relay, wherein said residual voltage depends on the supply voltage,
- at least one analogue-digital converter for converting the detected residual voltage into a digital signal, wherein an input of the analogue-digital converter is connected to the detection means, and
- at least one microcontroller for processing the digital signal, wherein the microcontroller is connected to an output of the analogue-digital converter, wherein
- the relay is controlled by the microcontroller in order to avoid that the relay will be closed, if the supply voltage, the residual voltage and/or the digital signal exceed a predetermined value, and wherein
- the microcontroller is connected to an acoustic device in order to display an acoustic signal, if the supply voltage, the residual voltage and/or the digital signal exceed the predetermined value.

The main idea of the present invention is the estimation of the main input alternating current voltage by detecting the residual voltage at the secondary side of the relay. Another central point of the present invention is the use of standard components. Thus, it is not necessary to add any specific components. In particular, a cooking oven and a cooking hob comprise usually the microcontroller, the analogue-digital converter, the power supply unit and the relay. Further, the cooking oven and the cooking hob comprise electric or electronic elements suitable for the detection means. The present invention allows the detection circuit without any additional component. The inventive detection circuit avoids the destruction of electric and electronic components as a result of a wrong power line connection.

According to the present invention the relay is controlled by the microcontroller in order to avoid that the relay will be closed, if the supply voltage, the residual voltage and/or the digital signal exceed a predetermined value. Thus, the relay cannot be closed, if the voltage of the connected power line is higher than the voltage of the correct power line.

Additionally the microcontroller may be connected to an optical device in order to display an optical signal, if the supply voltage, the residual voltage and/or the digital signal exceed the predetermined value. In this case the operator will be informed that the device is connected to the wrong power line.

Further, the power supply unit, the relay, the detection means, the analogue-digital converter and/or the microcontroller may be standard components of the household appliance. Thus, no additional components are required.

For example, the power supply unit, the relay, the detection means, the analogue-digital converter and/or the microcontroller may be components of an input voltage detection circuit.

In a similar way, the power supply unit, the relay, the detection means, the analogue-digital converter and/or the microcontroller may be components of a synchronisation circuit. The synchronisation circuit may be provided to synchronize the frequency of an alternating current voltage. If the residual voltage is continuous, then said synchronisation circuit is an option only. However, if the residual voltage is a sinusoidal signal or suchlike, then the synchronisation circuit is essential.

Preferably, the electric device may be a household appliance. For example, the electric device is a cooking appliance, in particular an induction hob and/or a cooking oven.

The object of the present invention is further achieved by the method according to claim 6.

According to the present invention the method for detecting a wrong power line connection is provided for a household appliance and comprises the steps of:
- connecting a power supply unit to an external supply voltage, wherein the secondary side of a relay is connected to the power supply unit and connectable to the external supply voltage,
- detecting a residual voltage at the secondary side of the relay, wherein said residual voltage depends on the supply voltage,
- converting the detected residual voltage into a digital signal, and
- processing the digital signal in order to recognize and/or display the wrong power line connection, wherein
- the relay cannot be closed, if the supply voltage, the residual voltage (UR) and/or the digital signal exceed a predetermined value, and wherein
- an acoustic signal is displayed, if the supply voltage, the residual voltage and/or the digital signal exceed the predetermined value.

The main idea of the present invention is estimating of the main input alternating current voltage by detecting the residual voltage at the secondary side of the relay. Said residual voltage depends on the supply voltage of the power line connection. The wrong power line connection can be detected, when the relay is open. Another central point of the present invention is the use of standard components, which are usually present in the electric device. Thus, it is not necessary to add any specific components and the method of the present invention allows the detection of wrong power line connection without any additional component. The inventive method avoids the destruction of electric and electronic components as a result of a wrong power line connection.

According to the present invention the relay cannot be closed, if the supply voltage, the residual voltage and/or the digital signal exceed a predetermined value.

Additionally, an optical signal is displayed, if the supply voltage, the residual voltage and/or the digital signal exceed the predetermined value.

Preferably, the method is at least partially performed by standard components of the household appliance. This allows a realization with low costs.

In particular, the method may be at least partially performed by components of an input voltage detection circuit. Further, the method may be at least partially performed by components of a synchronisation circuit. The synchronisation circuit may be provided to synchronize the frequency of an alternating current voltage. If the residual voltage is continuous, then the synchronisation circuit is only an option. However, if the residual voltage is a sinusoidal signal or suchlike, then the synchronisation circuit is essential.

According to the preferred embodiment of the present invention, the method is provided for a cooking appliance, in particular an induction hob and/or a cooking oven.

The novel and inventive features believed to be the characteristic of the present invention are set forth in the appended claims.

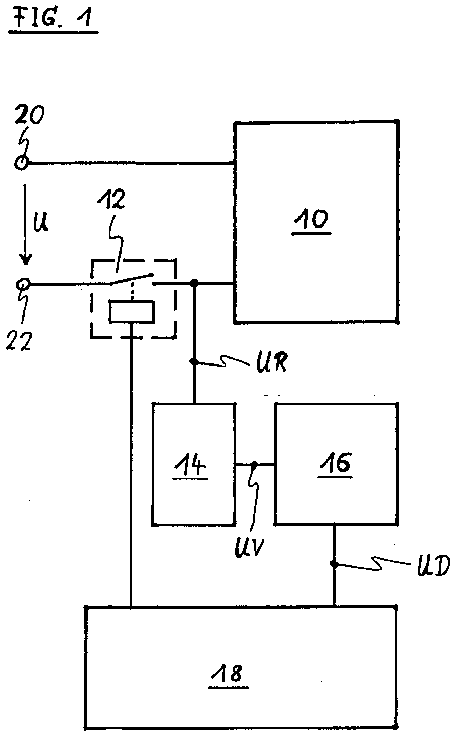

The invention will be described in further detail with reference to the drawing, in which
- FIG 1: illustrates a schematic diagram of a detection circuit for detecting a wrong power line connection according to a preferred embodiment of the present invention.
FIG 1 illustrates a schematic diagram of a detection circuit for detecting a wrong power line connection according to a preferred embodiment of the present invention. The detection circuit comprises a power supply unit 10, a relay 12, detection means 14, an analogue-digital converter 16 and a microcontroller 18. Said detection circuit is integrated within an electric device. In particular, the electric device is a household appliance, like a cooking oven or a cooking hob. In the latter case the power supply unit 10 supplies the heating elements of the cooking oven or the cooking hob, respectively.

The power supply unit 10 is directly connected to a first power input terminal 20. A secondary part of the relay 14 is connected to a second power input terminal 22 on a first side and to the power supply unit 10 on a second side. Thus, the connection between the second power input terminal 22 and the power supply unit 10 is switched by the relay 12. The second side of the secondary part of the relay 12 is connected to the detection means 14.

The detection means 14 are provided to detect a residual voltage UR between the secondary part of the relay 12 and the power supply unit 10. The residual voltage UR depends on a supply voltage U between the first power input terminal 20 and the second power input terminal 22. Thus, the residual voltage UR contains information about the supply voltage U. The detection means 14 provide voltage value UV corresponding with the residual voltage UR. The detection means 14 may be realized by a voltage divider or by a network made of resistor elements. In a special case the voltage value UV may be identical with the residual voltage UR.

The detection means 14 are connected to an input of the analogue-digital converter 16. The analogue-digital converter 16 receives the voltage value UV and converts it into a corresponding digital signal UD. An output of the analogue-digital converter 16 is connected to the microcontroller 18. The microcontroller 18 processes the digital signal UD. Further, the analogue-digital converter 16 may be an embedded block of the microcontroller 18.

The microcontroller 18 is further connected to a primary part of the relay 12. The microcontroller 18 avoids that the relay will be closed, if the digital signal UD exceeds a predetermined value. Thus, the relay 12 cannot be closed, if the supply voltage U exceeds a predetermined value.

For example, if the power supply unit 10 is provided for a supply voltage U of 230 V, but the real supply voltage U is 400 V, then the microcontroller 18 avoids that the relay 12 can be closed. The wrong supply voltage U may be occur, when an installer or an operator connects the first power input terminal 20 and the second power input terminal 22 with wrong power lines.

The detection circuit may consist of components, which are already present in the electric device. For example, a direct 50 Hz synchronization circuit or some of its components may be used as a part or the complete detection circuit. Also a voltage detection circuit, which is used for power regulation, may be used as the detection circuit.

The detection circuit may be realized within the electric device without any additional components. Thus the detection circuit is very cheap and needs no extra space on the board. The microcontroller 16 does not need any additional pins. The inventive detection circuit has low power consumption.

The detection circuit according to the present invention is able to detect or measure the supply voltage, even if the relay 12 is open.

### List of reference numerals

- 10: power supply unit
- 12: relay
- 14: detection means
- 16: analogue-digital converter
- 18: microcontroller
- 20: first power input terminal
- 22: second power input terminal

- U: supply voltage
- UR: residual voltage
- UV: voltage value
- UD: digital signal

## Claims

1. A household appliance with a detection circuit for detecting a wrong power line connection, wherein said detection circuit is integrated within the household appliance and comprises:
- a power supply unit (10) connectable to an external supply voltage (U),
- at least one relay (12), wherein the secondary side of said relay (12) is connected to the power supply unit (10) and connectable to the external supply voltage,
- detection means (14) for detecting a residual voltage (UR) at the secondary side of the relay (12), wherein said residual voltage (UR) depends on the supply voltage (U),
- at least one analogue-digital converter (16) for converting the detected residual voltage (UR) into a digital signal (UD), wherein an input of the analogue-digital converter (16) is connected to the detection means (14), and
- at least one microcontroller (18) for processing the digital signal (UD), wherein the microcontroller (18) is connected to an output of the analogue-digital converter (14), wherein
- the relay (12) is controlled by the microcontroller (18) in order to avoid that the relay (12) will be closed, if the supply voltage (U), the residual voltage (UR) and/or the digital signal (UD) exceed a predetermined value, and wherein
- the microcontroller (18) is connected to an acoustic device in order to display an acoustic signal, if the supply voltage (U), the residual voltage (UR) and/or the digital signal (UD) exceed the predetermined value.

2. The household appliance according to claim 1,
**characterized in, that**
the microcontroller (18) is connected to an optical device in order to display an optical signal, if the supply voltage (U), the residual voltage (UR) and/or the digital signal (UD) exceed the predetermined value.

3. The household appliance according to claim 1 or 2, **characterized in, that** the power supply unit (10), the relay (12), the detection means (14), the analogue-digital converter (16) and/or the microcontroller (18) are components of an input voltage detection circuit.

4. The household appliance according to any one of the preceding claims, **characterized in, that** the power supply unit (10), the relay (12), the detection means (14), the analogue-digital converter (16) and/or the microcontroller (18) are components of a synchronisation circuit provided for synchronizing the frequency of an alternating current voltage.

5. The household appliance according to any one of the preceding claims, **characterized in, that** the household appliance is an induction hob and/or a cooking oven.

6. A method for detecting a wrong power line connection, wherein said method is provided for a household appliance and comprises the steps of:
- connecting a power supply unit (10) to an external supply voltage (U), wherein the secondary side of a relay (12) is connected to the power supply unit (10) and connectable to the external supply voltage,
- detecting a residual voltage (UR) at the secondary side of the relay (12), wherein said residual voltage (UR) depends on the supply voltage (U),
- converting the detected residual voltage (UR) into a digital signal (UD), and
- processing the digital signal (UD) in order to recognize and/or display the wrong power line connection, wherein
- the relay (12) cannot be closed, if the supply voltage (U), the residual voltage (UR) and/or the digital signal (UD) exceed a predetermined value, and wherein
- an acoustic signal is displayed, if the supply voltage (U), the residual voltage (UR) and/or the digital signal (UD) exceed the predetermined value.

7. The method according to claim 6,
**characterized in, that**
an optical signal is displayed, if the supply voltage (U), the residual voltage (UR) and/or the digital signal (UD) exceed the predetermined value.

8. The method according to claim 6 or 7,
**characterized in, that**
the method is at least partially performed by components of an input voltage detection circuit.

9. The method according to any one of the claims 6 to 8,
**characterized in, that**
the method is at least partially performed by components of a synchronisation circuit provided for synchronizing the frequency of an alternating current voltage.

10. The method according to any one of the claims 6 to 9,
**characterized in, that**
the method is provided for an induction hob and/or a cooking oven.

## Patentansprüche

1. Haushaltsgerät mit einem Erkennungsschaltkreis zum Erkennen eines falschen Stromleitungsanschlusses, wobei der Erkennungsschaltkreis in das Haushaltsgerät integriert ist und umfasst:
- eine Stromversorgungseinheit (10), die an eine externe Versorgungsspannung (U) anschließbar ist,
- mindestens ein Relais (12), wobei die Sekundärseite des Relais (12) an die Stromversorgungseinheit (10) angeschlossen ist und an die externe Stromversorgung anschließbar ist,
- ein Erkennungselement (14) zum Erkennen einer Restspannung (UR) auf der Sekundärseite des Relais (12), wobei die Restspannung (UR) von der Versorgungsspannung (U) abhängig ist,
- mindestens einen Analog-Digital-Wandler (16) zum Wandeln der erkannten Restspannung (UR) in ein digitales Signal (UD), wobei ein Eingang des Analog-Digital-Wandlers (16) an das Erkennungselement (14) angeschlossen ist, und
- mindestens eine Mikrosteuereinheit (18) zum Verarbeiten des digitalen Signals (UD), wobei die Mikrosteuereinheit (18) an einen Ausgang der Mikrosteuereinheit (14) angeschlossen ist, wobei
- das Relais (12) durch die Mikrosteuereinheit (18) gesteuert wird, um zu vermeiden, dass das Relais (12) geschlossen wird, wenn die Versorgungsspannung (U), die Restspannung (UR) und/oder das digitale Signal (UD) einen vorbestimmten Wert überschreiten, und
- wobei die Mikrosteuereinheit (18) an eine akustische Vorrichtung angeschlossen ist, um ein akustisches Signal anzuzeigen, wenn die Versorgungsspannung (U), die Restspannung (UR) und/oder das digitale Signal (UD) den vorbestimmten Wert überschreiten.

2. Haushaltsgerät nach Anspruch 1, **dadurch gekennzeichnet, dass**
die Mikrosteuereinheit (18) an eine optische Vorrichtung angeschlossen ist, um ein optisches Signal anzuzeigen, wenn die Versorgungsspannung (U), die Restspannung (UR) und/oder das digitale Signal (UD) den vorbestimmten Wert überschreiten.

3. Haushaltsgerät nach Anspruch 1 oder 2, **dadurch gekennzeichnet, dass**
die Stromversorgungseinheit (10), das Relais (12), das Erkennungselement (14), der Analog-Digital-Wandler (16) und/oder die Mikrosteuereinheit (18) Komponenten eines Eingangsspannungserkennungsschaltkreises sind.

4. Haushaltsgerät nach einem der vorhergehenden Ansprüche, **dadurch gekennzeichnet, dass** die Stromversorgungseinheit (10), das Relais (12), das Erkennungselement (14), der Analog-Digital-Wandler (16) und/oder die Mikrosteuereinheit (18) Komponenten eines Synchronisationsschaltkreises sind, der zum Synchronisieren der Frequenz einer Wechselstromversorgung bereitgestellt wird.

5. Haushaltsgerät nach einem der vorhergehenden Ansprüche, **dadurch gekennzeichnet, dass** das Haushaltsgerät ein Induktionskochfeld und/oder ein Backofen ist.

6. Verfahren zum Erkennen eines falschen Stromleitungsanschlusses, wobei das Verfahren für ein Haushaltsgerät bereitgestellt wird und die folgenden Schritte umfasst:
- Anschließen einer Stromversorgungseinheit (10) an eine externe Stromversorgung (U), wobei die Sekundärseite eines Relais (12) an die Stromversorgungseinheit (10) angeschlossen ist und an die externe Stromversorgung anschließbar ist,
- Erkennen einer Restspannung (UR) auf der Sekundärseite des Relais (12), wobei die Restspannung (UR) von der Versorgungsspannung (U) abhängig ist,
- Wandeln der erkannten Restspannung (UR) in ein digitales Signal (UD), und
- Verarbeiten des digitalen Signals (UD), um den falschen Stromleitungsanschluss zu erkennen und/oder anzuzeigen, wobei
- das Relais (12) nicht geschlossen werden kann, wenn die Versorgungsspannung (U), die Restspannung (UR) und/oder das digitale Signal (UD) einen vorbestimmten Wert überschreiten, und wobei
- ein akustisches Signal angezeigt wird, wenn die Versorgungsspannung (U), die Restspannung (UR) und/oder das digitale Signal (UD) den vorbestimmten Wert überschreiten.

7. Verfahren nach Anspruch 6, **dadurch gekennzeichnet, dass**
ein optisches Signal angezeigt wird, wenn die Versorgungsspannung (U), die Restspannung (UR) und/oder das digitale Signal (UD) einen vorbestimmten Wert überschreiten.

8. Verfahren nach Anspruch 6 oder 7, **dadurch gekennzeichnet, dass**
das Verfahren mindestens teilweise mithilfe von Komponenten eines Eingangsspannungserkennungsschaltkreises ausgeführt wird.

9. Verfahren nach einem der Ansprüche 6 bis 8, **dadurch gekennzeichnet, dass**
das Verfahren mindestens teilweise mithilfe von Komponenten eines Synchronisationsschaltkreises ausgeführt wird, der zum Synchronisieren der Frequenz einer Wechselstromspannung bereitgestellt wird.

10. Verfahren nach einem der Ansprüche 6 bis 9, **dadurch gekennzeichnet, dass**
das Haushaltsgerät für ein Induktionskochfeld und/oder einen Backofen bereitgestellt wird.

## Revendications

1. Appareil ménager avec un circuit de détection pour détecter une connexion de ligne électrique erronée, ledit circuit de détection étant intégré dans l'appareil ménager et comprenant :
une unité d'alimentation (10) pouvant être connectée à une tension d'alimentation externe (U) ;
au moins un relais (12), le côté secondaire dudit relais (12) étant connecté à l'unité d'alimentation (10) et pouvant être connecté à la tension d'alimentation externe ;
un moyen de détection (14) pour détecter une tension résiduelle (UR) au niveau du côté secondaire du relais (12), ladite tension résiduelle (UR) dépendant de la tension d'alimentation (U) ;
au moins un convertisseur analogique-numérique (16) pour convertir la tension résiduelle (UR) détectée en un signal numérique (UD), une entrée du convertisseur analogique-numérique (16) étant connectée au moyen de détection (14) ; et
au moins un microcontrôleur (18) pour traiter le signal numérique (UD), le microcontrôleur (18) étant connecté à une sortie du convertisseur analogique-numérique (14),
le relais (12) étant contrôlé par le microcontrôleur (18) afin d'éviter la fermeture du relais (12) si la tension d'alimentation (U), la tension résiduelle (UR) et/ou le signal numérique (UD) dépassent une valeur prédéterminée, et
le microcontrôleur (18) étant connecté à un dispositif acoustique afin d'afficher un signal acoustique si la tension d'alimentation (U), la tension résiduelle (UR) et/ou le signal numérique (UD) dépassent la valeur prédéterminée.

2. Appareil ménager selon la revendication 1, **caractérisé en ce que** :
le microcontrôleur (18) est connecté à un dispositif optique afin d'afficher un signal optique si la tension d'alimentation (U), la tension résiduelle (UR) et/ou le signal numérique (UD) dépassent la valeur prédéterminée.

3. Appareil ménager selon la revendication 1 ou 2, **caractérisé en ce que** :
l'unité d'alimentation (10), le relais (12), le moyen de détection (14), le convertisseur analogique-numérique (16) et/ou le microcontrôleur (18) sont des composants d'un circuit de détection de tension d'entrée.

4. Appareil ménager selon l'une quelconque des revendications précédentes,
**caractérisé en ce que** :
l'unité d'alimentation (10), le relais (12), le moyen de détection (14), le convertisseur analogique-numérique (16) et/ou le microcontrôleur (18) sont des composants d'un circuit de synchronisation fourni pour synchroniser la fréquence d'une tension à courant alternatif.

5. Appareil ménager selon l'une quelconque des revendications précédentes,
**caractérisé en ce que** :
l'appareil ménager est une plaque de cuisson et/ou un four de cuisson.

6. Procédé de détection d'une connexion de ligne électrique erronée, ledit procédé étant fourni pour un appareil ménager et comprenant les étapes consistant à :
connecter une unité d'alimentation (10) à une tension d'alimentation externe (U), le côté secondaire d'un relais (12) étant connecté à l'unité d'alimentation (10) et pouvant être connecté à la tension d'alimentation externe ;
détecter une tension résiduelle (UR) au niveau du côté secondaire du relais (12), ladite tension résiduelle (UR) dépendant de la tension d'alimentation (U) ;
convertir la tension résiduelle (UR) détectée en un signal numérique (UD), et traiter le signal numérique (UD) afin de reconnaître et/ou d'afficher la connexion de ligne électrique erronée,
le relais (12) ne pouvant pas être fermé si la tension d'alimentation (U), la tension résiduelle (UR) et/ou le signal numérique (UD) dépassent une valeur prédéterminée, et
un signal acoustique étant affiché si la tension d'alimentation (U), la tension résiduelle (UR) et/ou le signal numérique (UD) dépassent la valeur prédéterminée.

7. Procédé selon la revendication 6,
**caractérisé en ce que** :
un signal optique est affiché si la tension d'alimentation (U), la tension résiduelle (UR) et/ou le signal numérique (UD) dépassent la valeur prédéterminée.

8. Procédé selon la revendication 6 ou 7,
**caractérisé en ce que** :
le procédé est au moins en partie réalisé par des composants d'un circuit de détection de tension d'entrée.

9. Procédé selon l'une quelconque des revendications 6 à 8,
**caractérisé en ce que** :
le procédé est au moins en partie réalisé par des composants d'un circuit de synchronisation fourni pour synchroniser la fréquence d'une tension à courant alternatif.

10. Procédé selon l'une quelconque des revendications 6 à 9,
**caractérisé en ce que** :
le procédé est fourni pour une plaque de cuisson et/ou un four de cuisson.
